(19) Europäisches Patentamt
European Patent Office
Office européen des brevets

(11) Publication number: **0 067 692**
**B1**

(12) # EUROPEAN PATENT SPECIFICATION

(45) Date of publication of patent specification: **23.04.86**

(51) Int. Cl.$^4$: **B 62 K 23/06**

(21) Application number: **82303059.8**

(22) Date of filing: **14.06.82**

(54) **Control device for a two-speed derailleur.**

(30) Priority: **15.06.81 JP 88520/81 u**

(43) Date of publication of application:
**22.12.82 Bulletin 82/51**

(45) Publication of the grant of the patent:
**23.04.86 Bulletin 86/17**

(84) Designated Contracting States:
**DE FR GB IT NL**

(56) References cited:
**CH-A- 185 021**
**FR-A- 705 129**
**GB-A-2 033 062**
**JP-A-53 126 649**
**US-A-3 633 437**
**US-A-3 808 907**

(73) Proprietor: **SHIMANO INDUSTRIAL COMPANY LIMITED**
**77, 3-cho Oimatsu-cho Sakai-shi**
**Osaka (JP)**

(72) Inventor: **Nagano, Masashi**
**74-19, Midorigaoka**
**Izumi-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

**EP 0 067 692 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a control device for use in controlling a two-speed derailleur via a control wire.

Conventionally, this type of control device, has a p ⑫ **EUROPEAN PATENT SPECIFICATION**

mo

for

via

secured at one end to the first control lever, and a retaining mechanism, which positions the first control lever and retains it in a desired operating position thereof and releases the second control lever, is provided between the respective control levers and the fixing member so that, when the first control lever swings in a direction for tensioning of the control wire, the second control lever swings in a direction for slackening of the control wire by a return spring, and, when the second control lever swings in a direction for pulling of the control wire, the first control lever swings to slacken the control wire under the influence of a return spring on the derailleur, thereby effecting gear changing between the two stages or speeds of the derailleur.

This type of control device is, however, subject not only to the possibility of incorrect operation due to the operation of both control levers in the same direction but also gives rise to a problem in that a cyclist's finger whilst operating one control lever may be struck by the other control lever during return movement thereof under the influence of the return spring.

FR—A—705 129 discloses a control device for use in controlling a two-speed derailleur via a control wire, which device comprises a fixing member having a first pivot shaft and a second pivot shaft, a control lever pivotally mounted on said first shaft and displaceable between first and second speed change positions, and having a retaining means for retaining one end of said control wire, a release lever pivotally mounted on said second pivot shaft on said fixing member and displaceable at its distal end away from or towards said control lever, and retaining means provided on said control lever and said release lever, for retaining said control lever in its speed change position. It may be seen however that the device of FR—A—705 129 has the control lever and release lever mounted for movement in the same direction. This means in turn that the necessary operating movements of the rider's fingers for both the control lever and the release lever are substantially the same. As a result there automatically arises a significant risk of incorrect operation of the device due to momentary lapses in concentration etc. which are all the more likely due to the need for the rider's concentration to be primarily directed to surrounding environment including other traffic etc.

A further consequence of the arrangement whereby both control lever and release lever move in the same direction is that relative movement of the levers involves movement thereof towards each other and since the rider's fingers often need to be in a position between the levers for operating one of said levers, there automatically arises a significant possibility of accidental injury to the rider's fingers in the event of any momentary lapses in concentration which in ... e due to the other ... der's concentration. ... t invention to avoid ... he abovementioned disadvantages.

The present invention provides a control device for use in controlling a two-speed derailleur via a control wire, which device comprises a fixing member having a first pivot shaft and a second pivot shaft, a control lever pivotally mounted on said first pivot shaft and displaceable between first and second speed change positions, and having a retaining means for retaining one end of said control wire, a release lever pivotally mounted on said second pivot shaft on said fixing member and displaceable at its distal end away from or towards said control lever, and retaining means provided on said control lever and said release lever, for retaining said control lever in its speed change position characterized in that said second pivot shaft has its axis generally perpendicular to that of said first pivot shaft and there is provided a first biasing means for biasing said control lever towards its first speed change position and a second biasing means for biasing said release lever at its distal end in a direction towards said control lever and in that said retaining means comprises co-operating retaining means provided on the control lever and the distal end of the release lever for interengagement in a retaining position thereof for retaining the control lever in its second speed change position against the biasing force of said first biasing means through said release lever.

In the control device of the invention, the control lever is operated for displacement in one direction whilst the release lever is shifted in a given direction for return movement of the control lever, for switching the derailleur from its high speed stage to its low speed stage and *vice versa*. By this means the cycle speed can be quickly and easily changed.

Furthermore, the provision of operation of the control lever and release lever in different planes approximately perpendicularly to each other for changing speed, helps to avoid incorrect operation and prevent a rider from being struck on a finger being used to operate one lever, by the other lever during return movement of the latter under the respective biasing means.

The control device of the present invention is generally used for cycles, being usually mounted on the handlebars near a hand grip portion thereof. It is therefore preferable that in use the first pivot shaft for the control lever should extend horizontally to allow the control lever to be pivotally movable in a generally vertical plane and the second pivot shaft for the release lever to extend vertically to allow the release lever to move pivotally in a generally horizontal plane, to allow the rider to use the thumb of his hand gripping the handlebar grip portion to readily operate the control lever and release lever without the need for excessive force and strain.

Further preferred features and advantages of the invention will appear from the following detailed description given by way of example of a preferred embodiment illustrated with reference to the accompanying drawings in which:

Fig. 1 is a front elevation of one embodiment of a control device of the invention mounted on a cycle handlebar;

Fig. 2 is a plan view of the device of Fig. 1;

Fig. 3 is a side elevation of the device of Figs. 1 and 2;

Fig. 4 is an exploded perspective view of the device of Figs. 1 to 3;

Fig. 5 is a sectional view taken along the line V—V in Fig. 1;

Fig. 6 is a front elevation corresponding generally to Fig. 1 illustrating a different operational position of the control lever;

Fig. 7 is a sectional view corresponding to Fig. 5 taken on the line VII—VII in Fig. 6; and

Fig. 8 is a sectional view taken on the line VIII—VIII in Fig. 3.

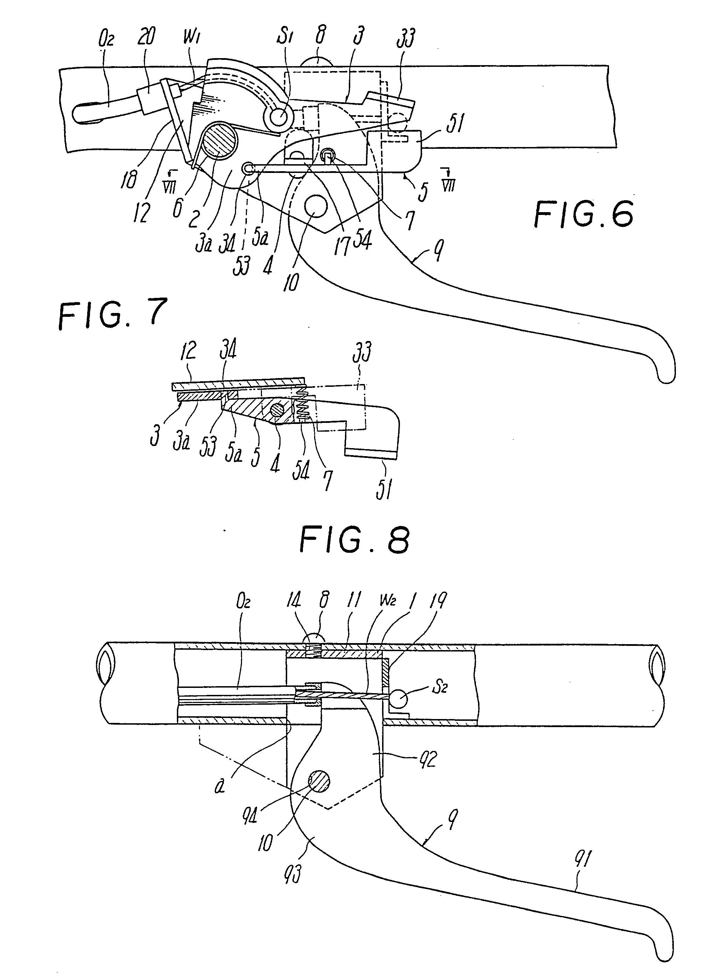

A control device shown in Fig. 1 is mounted on a handlebar *H* in the vicinity of its hand grip portion via a fixing member 1. The device has a first, generally horizontally extending, pivot shaft 2 and a second pivot shaft 4 whose principal axis is approximately perpendicular to that of the first pivot shaft 2. The first pivot shaft 2 supports a control lever 3 for pivotal movement thereof between a first speed change position shown in Fig. 1 and a second speed change position in Fig. 6. The second pivot shaft 4 supports a release lever 5 for pivotal movement away from or towards the control lever 3 as shown in Figs. 5 and 7. A first resilient biasing means 6 for biasing the control lever 3 to its first change position is arranged for acting between the fixing member 1 and the control lever 3, and a second resilient means 7 for biasing the release lever 5 at its distal end towards the control lever 3 is arranged for acting between the fixing member 1 and the release lever 5. A retaining means is provided between the control lever 3 and the release lever 5, which retaining means retains the control lever 3 in its second speed change position where it is shifted against the first biasing means 6. Then, the release lever 5 swings against the biasing force of the second biasing means 7 to release the holding means and return the control lever 3 automatically under the influence of the return force of first biasing means 6.

The fixing member 1, as shown in Fig. 4, is in the form of a cranked metallic plate and comprises a fixing position 11 which is generally U-shaped in section extending vertically upwards into the interior of the handlebar *H* through an aperture *a* in the underside thereof, a horizontal connecting portion 13, and a lever support portion 12 extending vertically upwards from the connecting portion 13. The fixing portion 11 is secured to the handlebar *H* by a screw 8 which screw-threadedly engages a threaded bore 14 formed in the upper wall of the fixing portion 11. The lever support portion 12 has a first, horizontal, shaft receiving bore 15 and a second vertical, shaft receiving bore 16 in a horizontally extending support tongue 17 which projects to one side of said support portion 12, for rceiving respective ones of the first and second pivot shafts 2 and 4. The support portion 12 has an adjustment portion 18 for setting the first speed change position of the control lever 3.

The control lever 3, as shown in Fig. 4, comprises a boss 32 having a pivot shaft receiving bore 31 for the first pivot shaft 2 and a control portion 33 cranked at right angles to the boss 32, and operable by the control portion 33 for displacement in a vertical plane by swinging on the first pivot shaft 2 between the first speed change position shown in Fig. 1 and the second speed change position shown in Fig. 6 thereby to switch the derailleur to a high speed stage from a low speed stage and *vice versa*.

The control lever 3 also has an engagement recess 34 constituting a retaining means to be further described hereinbelow and a retaining means of a bore 35 into which an end piece $S_1$ of control wire $W_1$ is inserted.

Fig. 4 also shows a wire guide 40 of generally C-shaped section and having a guide groove for guiding the control wire $W_1$ and fixed to the outer surface 3*a* of control lever 3.

The release lever 5 is in the form of an elongate metallic plate and has at one end a control portion 51, at a lengthwise intermediate portion a pivot shaft receiving bore 52 for receiving the second pivot shaft 4, and at its distal end 5*a* an engagement projection 53, the pivot shaft receiving bore 52 receiving therein the second pivot shaft 4 thereby to support the release lever 5 for swinging movement in a vertical plane. The engagement projection 53 and the engagement recess 34 of the control lever 3 together constitute a retaining means as shown, whereby the release lever 5 selectively retains the control lever 3 in its second speed change position or releases said control lever 3 therefrom.

In use the control lever 3 is swung, against the biasing force of first biasing means 6, towards its second second speed change position and is retained thereat by means of the engagement of the projection 53 with the recess 34 under the influence of the biasing force of the second biasing means 7. The release lever 5 is operated via its control portion 51 to swing at its distal end away from the control lever 3 against the biasing force of the second biasing means 7 and the projection 53 disengages from the recess 34 thereby to release the control lever 3 and return it to its first speed change position under the influence of the return force of the first biasing means 6.

The first resilient biasing means 6 is generally in the form of a spring wire coiled at an intermediate portion, being supported at its coiled portion on the first pivot shaft 2, and engaging at one end with the lower portion of the support position 12 of the fixing member 1 and at its other end with the control lever 3, thereby biasing the control lever 3 to always contact the adjustment portion 18 and in a direction for slackening of the control wire $W_1$.

The second resilient biasing means 7 is generally in the form of a coiled spring interposed between the lever support portion 12 and a spring seat 54 projecting from the release lever between the shaft bore 52 and the control portion 51, thereby biasing the distal end 5*a* of the release lever 5 towards the outer surface 3*a* of the control lever 3.

Also, the fixing position 11 of fixing member 1, as shown in Fig. 4, is generally box-shaped, pivotally mounting between its opposed side walls 11*b* and 11*c*, a brake lever 9 for swinging in a vertical plane on a pivot pin 10 parallel to the first pivot shaft 2, and has a cranked wire-retainer 19 extending across said opposed side walls 11*b* and 11*c*. The regulatory portion 18 also supports an outer stop 20 of an outer sheath $O_1$ encasing the control wire $W_1$.

The brake lever 9, as shown in Figs. 1 and 4, comprises an elongate control portion 91 and a support portion 92 cranked at right-angles from one lengthwise end of the control portion 91, the cranked portion 93 providing a pin hole 94 in which the pivot pin 10 is mounted to support the brake lever 9 for swinging movement in a vertical plane, the support portion 92 extending into the interior of the handlebar *H* and supporting an outer stop 30 for an outer sheath $O_2$ encasing a brake operating wire $W_2$. An end piece $S_2$ of the brake operating wire $W_2$ is retained by the wire-retainer 19, the brake operating wire $W_2$ and outer sheath $O_2$ extending through the interior of the handlebar *H* at this point.

Incidentally, the brake lever 9 need not necessarily be mounted on the fixing member 1, and a separate fixing member for the brake lever 9 alone could be used so that the mounting means on the fixing means, can be omitted with the brake lever 9 being independently supported thereby simplifying the brake lever mounting construction.

Alternatively, the fixing member 1 could be secured to the handlebar *H* with the aid of a clamping band means, or could be provided with a cover covering the base of the control lever 3 as well as that of the release lever 5, the cover having a window through which a display panel provided on the control lever 3 for displaying each speed change stage is visible, or having suitable indicia which can be indicated selectively by a pointer attached to the control lever 3.

The control device of the invention is particularly suited for use with two stage derailleurs on mini-bicycles or motocross bicycles. Fig. 1 shows the control lever 3 in the first speed change position where the derailleur is held in its high speed stage.

The operation of the control device will now be described.

When the control lever 3 in Fig. 1 is swung against the biasing means 6 vertically downwardly (in the direction of the arrow X in Fig. 1), in a direction of tensioning of the control wire $W_1$, the derailleur is switched to the low speed stage and the engagement projection 53 on the release lever 5 engages with the engaging precess 34 of the control lever 3 as shown in Figs. 6 and 7 to retain the control lever 3 in its second speed change position, thereby maintaining the change-over or chain shift means of the derailleur in its low speed stage. In this case, when the recess 34 is formed as a through bore, the tip of the projection 53 passes through said through bore and abuts against the support portion 12 of the fixing member 1 to generate a sound, whereby the cyclist can obtain positive confirmation of the speed-changing as well as a clicking sensation upon operation of the lever 3.

Now, when the derailleur is returned to its high speed stage, the release lever 5 in Fig. 6 swings against the biasing force of the second biasing means 7 horizontally unidirectionally (in the direction of the arrow *Y* in Fig. 2 or Fig. 3) to disengage the projection 53 from the recess 34, whereby the control lever 3 is released to be automatically returned vertically upwardly (in the direction of the arrow *Z*), in a direction of slackening of the wire $W_1$, under the influence of the biasing force of the first biasing means 6, to be stopped by abutment with the regulatory portion 18.

Thus, the control lever 3 and release lever 5 travel in different planes at an angle to each other thereby avoiding incorrect operation during gear changing and preventing the cyclist's finger on the release lever from being struck by the control lever 3 as the latter springs back under the influence of the biasing force of the first biasing means 6.

As may be seen in the above-mentioned embodiment, with the fixng portion 11 of the fixing member 1 fixed within the handle bar *H* the control portions 33 and 51 of the control lever 3 and release lever 5 can be arranged so as to be easy to operate and both the levers 3 and 5 can be positioned inwardly of the handlebar *H* minimising the possibility of catching on the cyclist's clothes or being damaged even when the bicycle falls over.

As an alternative, the control lever 3 and the release lever 5 could be arranged for swinging movement in a manner which is the reverse of that described above, that is with the former swinging horizontally and the latter vertically, or the control lever 3 being arranged for swinging in a direction of slackening of the control wire $W_1$ to change gear.

Also, when the derailleur is provided with a return spring, this can itself, serve as the first biasing means 6 notwithstanding its relative remoteness.

The release lever 5 could be formed, for example, as a flexible leaf spring or a synthetic resin plate so that the distal end of the release lever 5, instead of the second biasing means 7, could be biased towards the outer surface 3*a* of the control lever 3.

Also, the engagement recess 34 could be provided on the release lever 4 and the engagement projection 53 on the control lever 3, or the engagement recess 34 could be in the form of a slit instead of a through bore as shown in the drawing.

**Claims**

1. A control device for use in controlling a two-speed derailleur via a control wire, which device comprises a fixing member (1) having a first pivot shaft (2) and a second pivot shaft (4), a control lever (3) pivotally mounted on said first pivot shaft (2) and displaceable between first and second speed change positions, and having a retaining means (35) for retaining one end ($S_1$) of said control wire ($W_1$), a release lever (5) pivotally mounted on said second pivot shaft (4) on said fixing member (1) and displaceable at its distal end (5*a*) away from or towards said control lever (3), and retaining means (34, 53) provided on said control lever (3) and said release lever (5), for retaining said control lever (3) in its speed change position characterized in that said second pivot shaft (4) has its axis generally perpendicular to that of said first pivot shaft (2) and there is provided a first biasing means (6) for biasing said control lever (3) towards its first speed change position and a second biasing means (7) for biasing said release lever (5) at its distal end (5*a*) in a direction towards said control lever (3) and in that said retaining means comprises co-operating retaining means provided on the control lever (3) and the distal end (5*a*) of the release lever (5) for interengagement in a retaining position thereof for retaining the control lever (3) in its second speed change position against the biasing force of said first biasing means (6) through said release lever (5).

2. A control device according to claim 1, wherein said first pivot shaft (2) is formed and arranged so as to extend generally horizontally, in use, and said second pivot shaft (4) so as to extend generally vertically so that said control lever (3) and said release lever (5) swing in generally vertical and generally horizontal planes, respectively.

3. A control device according to claim 1 or claim 2, wherein said fixing member (1) has a regulatory portion (18) for setting said first speed change position of said control lever (3).

4. A control device according to any one of claims 1 to 3, wherein said fixing member (1) has a fixing portion (11) and a lever supporting portion (12), said lever supporting portion (12) having a vertical portion and a support (17) extending horizontally from said vertical portion, so that said first pivot shaft (2) is supported horizontally in said vertical portion and said second pivot shaft (4) is supported vertically on said support (17).

5. A control device according to any one of claims 1 to 4, wherein said retaining means comprises an engagement recess (34) and a engagement projection (53) engageable therewith, said recess (34) being provided in one of a wall of said control lever (3) and the distal end (5*a*) of said release lever (5), said engagement projection (53) being provided on the other.

6. A control device according to any one of claims 1 to 5, wherein a brake lever (9) is pivotally mounted (10) on said fixing member (1).

7. A control device according to any one of claims 1 to 6 when mounted on a cycle and secured thereto in the vicinity of a gripping portion of the handlebars (*H*).

8. A control device according to claim 7 wherein said fixing member (1) has a fixing portion (11) of generally U-shaped section extending into the interior of the handlebar (*H*) through an aperture (*a*) in the vicinity of the gripping portion thereof, said fixing portion (11) having at its upper wall a threaded bore (14) and being fixed to said handlebar (*H*) with the aid of screw means (8) extending through said handlebar (*H*) opposite said aperture (*a*) and screw-threadedly engaging said threaded bore (14).

9. A control device according to claim 8, wherein said fixing portion (11) of said fixing member (1) has a support pin (10) extending between opposed side walls (11*b*, 11*c*) of said fixing portion (11) for pivotally mounting a brake lever (9) between said side walls (11*b*, 11*c*).

**Patentansprüche**

1. Betätigungsvorrichtung für eine Zweigangschaltung mit Betätigungskabel, mit einem Befestigungsteil (1) mit einer ersten Schwenkwelle (2) und einer zweiten Schwenkwelle (4), einem Betätigungshebel (3), der schwenkbar an der ersten Schwenkwelle (2) befestigt und zwischen einer ersten und zweiten Schaltstellung verschiebbar ist, und der eine Rückhaltevorrichtung (35) zum Halten eines Endes ($S_1$) des Betätigungskabels ($W_1$), einen Entriegelunghebel (5), der schenkbar an der zweiten Schenkwelle (4) am Befestigungsteil (1) befestigt und an seinem distalen Ende (5*a*) vom oder zum Betätigungshebel (3) weg bzw. hin verschiebbar ist, und eine Sperrvorrichtung (34, 53) aufweist, die am Betätigungshebel (3) und dem Eintriegelungshebel (5) vorgesehen ist, um den Betätigungshebel (3) in seiner Schaltstellung zu halten, dadurch gekennzeichnet, daß die Achse der zweiten Schwenkwelle (4) in wesentlichen senkrecht zur ersten Schwenkwelle (2) angeordnet ist, daß eine erste Vorspannvorrichtung (6) vorgesehen ist, um den Betätigungshebel (3) in Richtung auf seine erste Schaltstellung vorzuspannen, und eine zweite Vorspannvorrichtung (7) zum Vorspannen des distalen Endes (5*a*) des Eintriegelungshebels (5) in Richtung auf den Betätigungshebel (3), und daß die Sperrvorrichtung zusammenwirkende Sperrelemente am Betätigungshebel (3) und dem distalen Ende (5*a*) des Eintriegelungshebels (5) aufweist, die in ihrer Sperrstellung ineinander eingreifen und den Betätigungshebel (3) entgegen der Vorspannkraft der ersten Vorspannvorrichtung (6) durch den Entriegelungshebel (5) in seiner zweiten Schaltstellung halten.

2. Betätigungsvorrichtung nach Anspruch 1, dadurch gekennzeichnet, daß die erste Schwenkwelle so gestaltet und angeordnet ist, daß sie sich im Betrieb im wesentlichen horizontal erstreckt und daß die zweite Schwenkwelle (4) sich im wesentlichen vertikal erstreckt, so daß der Betätigungshebel (3) und der Entriegelungshebel (5) im wesentlichen in der vertikalen, bzw. horizontalen Ebene schwenken.

3. Betätigungsvorrichtung nach Anspruch 1 oder 2, dadurch gekennzeichnet, daß das Befestigungsteil (1) ein Einstellteil (18) zum Einstellen der ersten Schaltstellung des Betätigungshebels (3) aufweist.

4. Betätigungsvorrichtung nach einem der Ansprüche 1 bis 3, dadurch gekennzeichnet, daß das Befestigungteil (1) einen Befestigungsabschnitt (11) und einen Hebelträgerabschnitt (12) aufweist, welcher einen Vertikalabschnitt und einen Trägerabschnitt (17) aufweist, dr sich vom Vertikalabschnitt horizontal aus erstreckt, so daß die erste Schwenkwelle (2) horizontal im Vertikalabschnitt abgestützt ist und die zweite Schwenkwelle (4) vertikal am Trägerabschnitt (17) abgestützt ist.

5. Betätigungsvorrichtung nach einem der Ansprüche 1 bis 4, dadurch gekennzeichnet, daß die Sperrvorrichtung eine Eingriffsausnehmung (34) und einen Eingriffsvorsprung (53) aufweist, der damit in Eingriff bringbar ist, wobei die Ausnehmung (34) entweder in der Wandung des Betätigungshebels (3) oder am distalen Ende (5*a*) des Entriegelungshebels (5) vorgesehen ist und der Eingriffsvorsprung (53) am anderen der beiden vorgesehen ist.

6. Betätigungsvorrichtung nach einem der Ansprüche 1 bis 5, dadurch gekennzeichnet, das ein Bremsgriff (9) schwenkbar (um 10) am Befestigungsteil (1) befestigt ist.

7. Betätigungsvorrichtung nach einem der Ansprüche 1 bis 6, dadurch gekennzeichnet, daß sie bei der Montage an ein Fahrrad in der Nähe des Griffteils der Lenkstange (*H*) angeordnet ist.

8. Betätigungsvorrichtung nach Anspruch 7, dadurch gekennzeichnet, daß das Befestigungsteil (1) einen Befestigungsabschnitt (11) von im wesentlichen U-förmigen Querschnitt aufweist, der sich in das Innere der Lenkstange (*H*) erstreckt durch eine Öffnung (*a*) in der Nähe des Griffteils, wobei der Befestigungsabschnitt (11) an seiner oberen Wand eine Gewindebohrung (14) aufweist und an der Lenkstange (*H*) mit Hilfe einer Schraubenvorrichtung (8) befestigt wird, die sich gegenüber der Öffnung (*a*) durch die Lenkstange (*H*) erstreckt und mit der Gewindebohrung (14) in Gewindeeingriff steht.

9. Betätigungsvorrichtung nach Anspruch 8, dadurch gekennzeichnet, daß der Befestigungsabschnitt (11) des Befestigungsteils (1) einen Trägerstift (10) aufweist, der sich zwischen den gegenüberliegenden Seitenwandungen (11*b*, 11*c*) des Befestigungsabschnitts (11) erstreckt, um einen Bremshebel (6) schwenkbar zwischen den Seitenwandungen (11*b*, 11*c*) zu befestigen.

**Revendications**

1. Dispositif de commande destiné être utilisé pour commander un dérailleur à deux vitesses au moyen d'un câble de commande, dispositif qui comprend un support de fixation (1) comportant un premier pivot (2) et un second pivot (4), un levier de commande (3) articulé sur le dit premier pivot (2) et déplaçable entre une première et une seconde positions de changement de vitesse et comportant un moyen de retenue (35) pour retenir une extrémité ($S_1$) du dit câble de commande ($W_1$), un levier de dégagement (5) articulé sur le dit second pivot (4) sur le dit support de fixation (1) et déplaçable à son extrémité distale (5*a*) pour s'écarter ou se rapprocher du dit levier de commande (3), et un moyen de retenue (34, 53) prévu sur le dit levier de commande (3) et le dit levier de dégagement (5) pour retenir le dit levier de commande (3) dans sa position de changement de vitesse, caractérisé en ce que le dit second pivot (4) a son axe généralement perpendiculaire à celui du dit premier pivot (2) et qu'il est prévu un premier moyen de poussée (6) pour pousser le dit levier de commande (3) en direction de sa première position de changement de vitesse et un second moyen de poussée (7) pour pousser le dit levier de dégagement (5) à son extrémité distale (5*a*) dans une direction orientée vers le dit levier de commande (3), et en ce que le dit moyen de retenue comprend des moyens de retenue coopérants prévus sur le levier de commande (3) et sur l'extrémité distale (5*a*) du levier de dégagement (5) en vue d'un engagement mutuel dans une position de retenue de ces leviers pour retenir le levier de commande (3) dans sa seconde position de changement de vitesse contre l'effort de poussée exercé par le dit premier moyen de poussée (6) à travers le dit levier dégagement (5).

2. Dispositif de commande suivant la revendication 1, dans lequel le dit premier pivot (2) est formé et agencé de façon à être disposé, en service, selon une direction généralement horizontale, et le dit second pivot (4) est formé et agencé de façon à être disposé selon une direction généralement verticale, de sorte que le dit levier de commande (3) et le dit levier de dégagement (5) basculent respectivement dans un plan généralement vertical et généralement horizontal.

3. Dispositif de commande suivant la revendication 1 ou la revendication 2, dans lequel le dit support de fixation (1) comprend une partie de réglage (18) destiné à régler la première position de changement de vitesse du dit levier de commande (3).

4. Dispositif de commande suivant l'une ou l'autre des revendications 1 à 3, dans lequel le dit support de fixation (1) comporte une partie de fixation (11) et une partie (12) portant les leviers, la dite partie (12) portant les leviers comprenant une portion verticale et un support (17) s'étendant horizontalement à partir de la dite portion verticale, de sorte que le dit premier pivot (2) est supporté horizontalement dans la dite portion verticale et que le dit second pivot (4) est supporté verticalement dans le dit support (17).

5. Dispositif de commande suivant l'une ou l'autre des revendications 1 à 4, dans lequel le dit moyen de retenue comprend un creux d'engagement (34) et une saillie d'engagement (53) coopérant l'un avec l'autre, le dit creux (34) étant prévu dans une des deux parois constituées par le dit levier de commande (3) et par l'extrémité distale (5*a*) du dit levier de dégagement (5), la dite saillie d'engagement (53) étant prévue sur l'autre de ces deux parois.

6. Dispositif de commande suivant l'une ou l'autre des revendications 1 à 5, dans lequel un levier de frein (9) est articulé (10) sur le dit support de fixation (1).

7. Dispositif de commande suivant l'une ou l'autre des revendications 1 à 6, lorsqu'il est monté sur une bicyclette et fixé à celle-ci au voisinage d'une poignée du guidon (*H*).

8. Dispositif de commande suivant la revendication 7, dans lequel le dit support de fixation (1) comporte une partie de fixation (11) qui a une section générale en U s'étendant à l'intérieur du guidon (*H*) à travers une ouverture (*a*) ménagée au voisinage de la poignée de celui-ci, la dite de fixation (11) présentant un trou fileté (14) dans sa paroi supérieure et étant fixée au dit guidon (*H*) à l'aide d'une vis (8) s'étendant à travers le dit guidon (*H*) en face de la dite ouverture (*a*) et vitesse dans le dit trou fileté (14).

9. Dispositif de commande suivant la revendication 8, dans lequel la dite partie de fixation (1) du dit support de fixation (1) comprend une broche (10) s'étendant entre les parois latérales opposées (11*b*, 11*c*) de la dite partie de fixation (11) et destinée à constituer l'articulation d'un levier de frein (9) entre les dites parois latérales (11*b*, 11*c*).

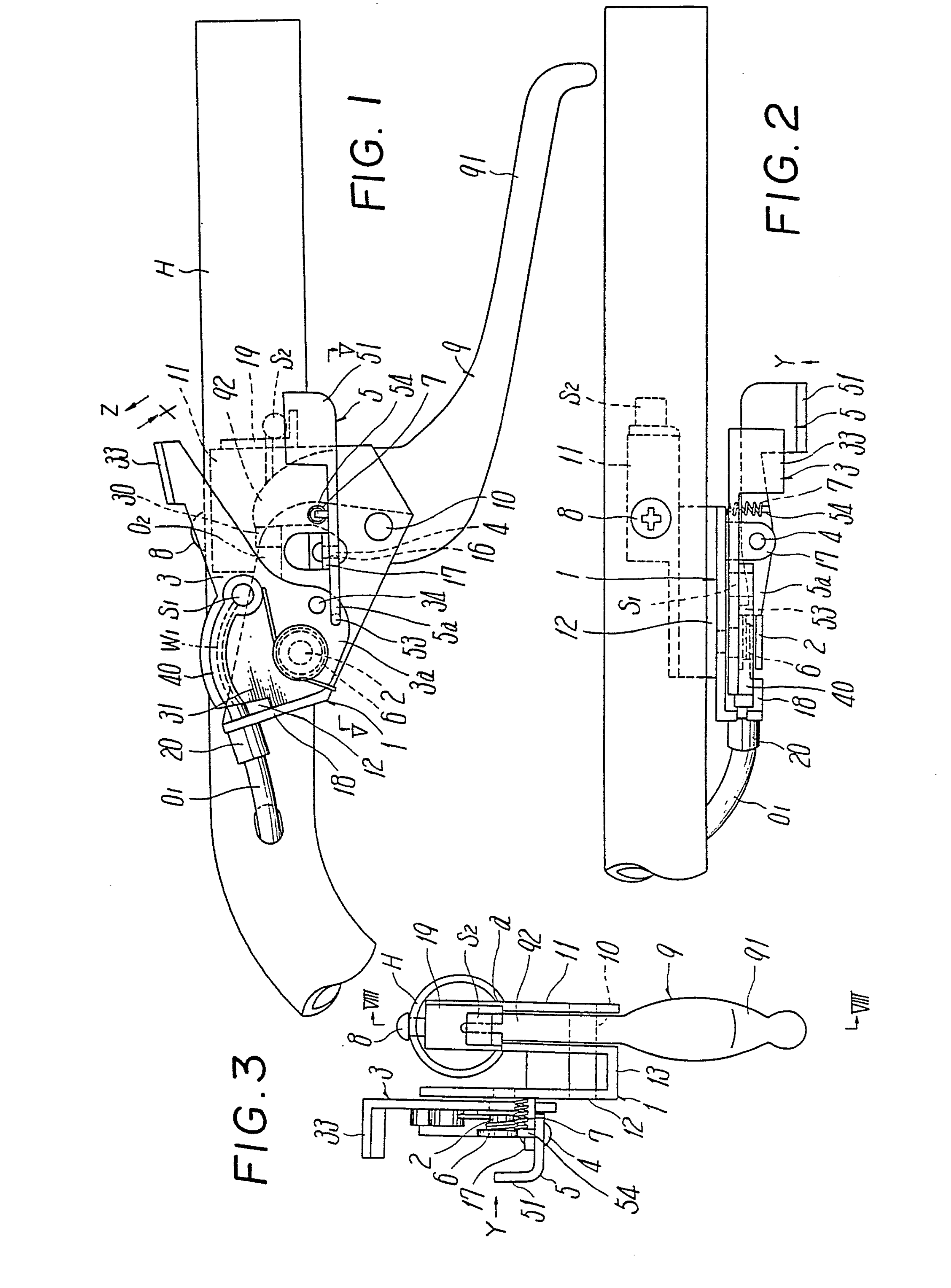

FIG. 1

FIG. 2

FIG. 3

FIG. 4

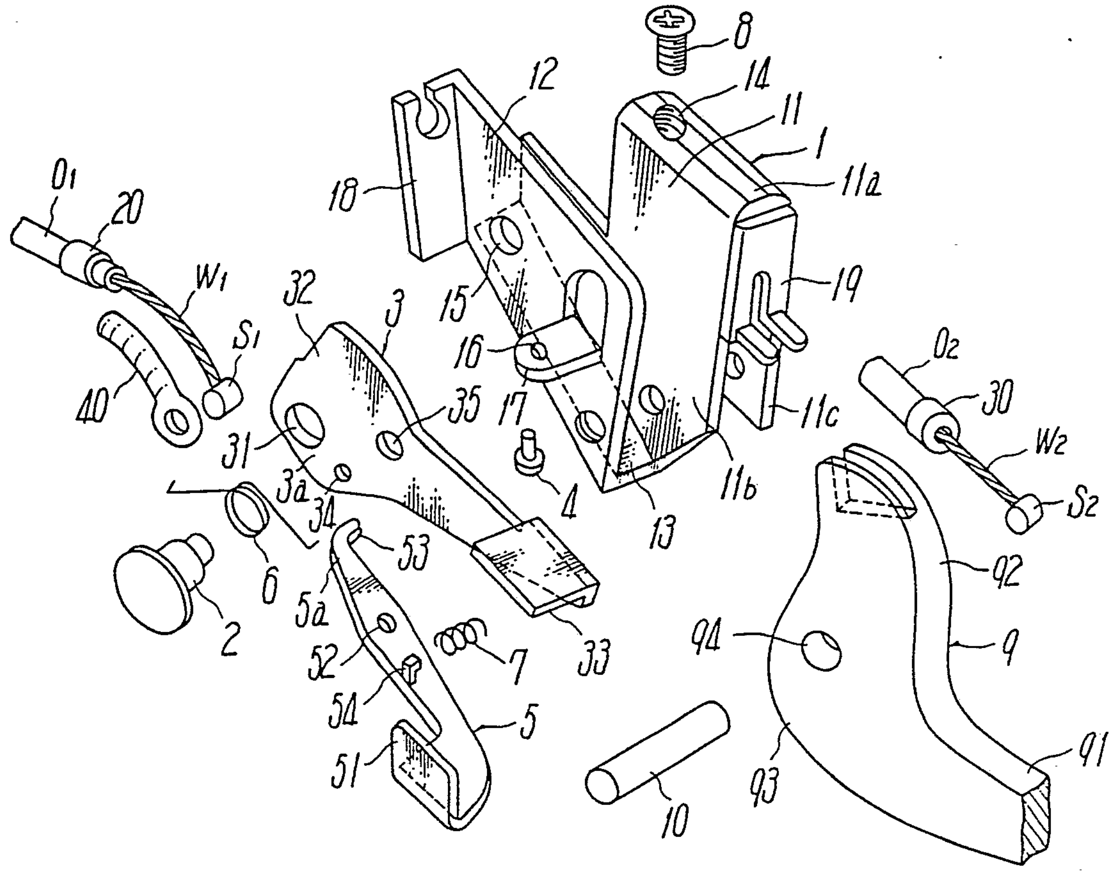
8
12
14
11
1
11a
18
O1
20
W1
19
15
32
3
S1
16
17
O2
30
35
W2
40
31
4
11c
3a
34
13
11b
S2
53
92
6
5a
33
2
94
9
52
7
54
5
51
91
93
10

FIG. 5

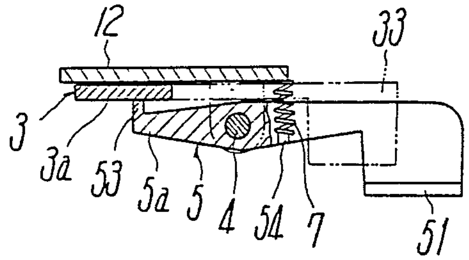
12
33
3
3a
53
5a
5
4
54
7
51

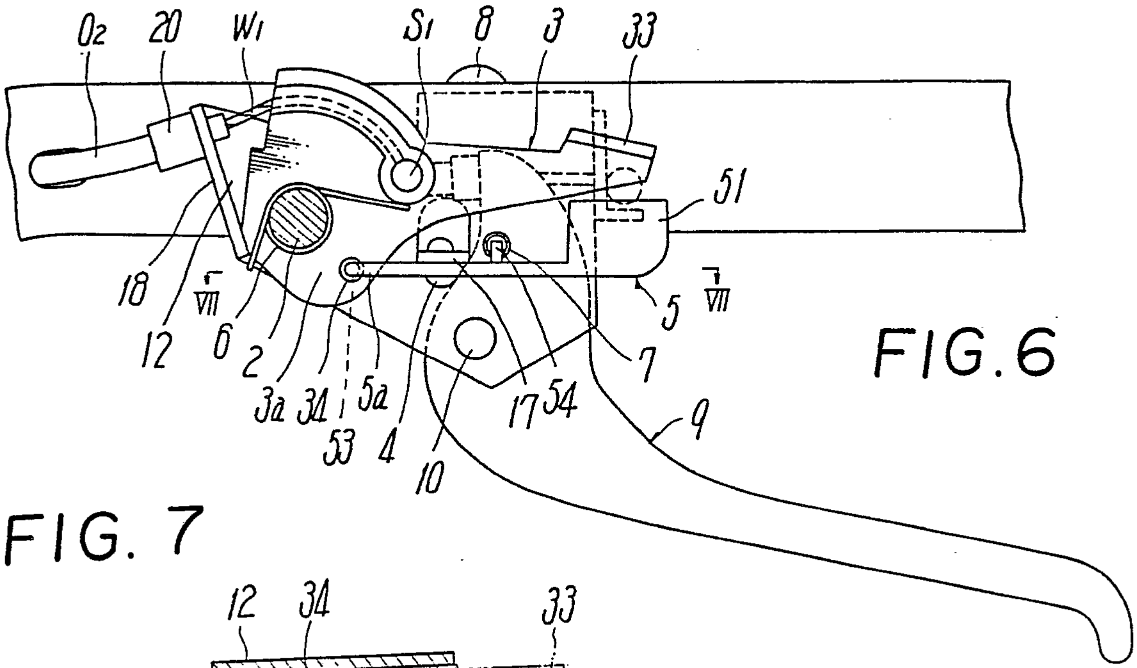


FIG.6

FIG. 7

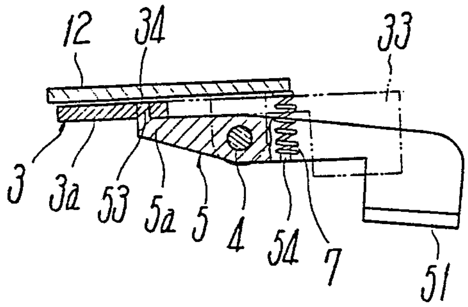


FIG. 8